# EUROPEAN PATENT APPLICATION

(11) **EP 4 749 986 A1**
(43) Date of publication of application: **27.05.2026**
(21) Application number: 24214453.3
(22) Date of filing: 21.11.2024
(51) Int. Cl.: H04L 9/08, H04B 10/70, H04L 41/40

(54) **TECHNIQUES FOR DISTRIBUTING ENTANGLED PHOTONS AS A SERVICE**

(71) Applicant: Deutsche Telekom AG, 53113 Bonn (DE)
(72) Inventor: GEITZ, Marc, Hagen (DE); Döring, Ronny, 16775 Sonnenberg (DE); Yin, Ming, 16341 Panketal (DE); Braun, Ralf-Peter, 12305 Berlin (DE)
(74) Representative: karo IP

(57) **Abstract**

Techniques for exposing entangled quantum states is disclosed, comprising the following steps:
• storing entangled quantum states in a quantum memory at a network node;
• storing metadata associated with the quantum states in a classical metadata memory, wherein the metadata includes a physical storage address, a time slot identifier and a logical identifier;
• requesting the entangled quantum states from the quantum memory via a classical API;
• exposing the entangled quantum states to users of a quantum communication protocol over a quantum communication channel.

## Description

The present invention relates to the field of quantum communications and, more specifically, to systems and methods for the distribution and management of entangled quantum states, including photons. The invention addresses various aspects such as synchronization, redundancy, memory management, and/or abstraction layers, enabling efficient use of quantum communication networks and their integration into classical telecommunication infrastructures.

With the advent of the quantum internet, the generation, distribution, storage, and utilization of entangled quantum states is fundamental to enabling quantum communication protocols such as Quantum Key Distribution (QKD), super-dense coding, and quantum teleportation. However, classical communication networks are not inherently equipped to manage quantum states, necessitating an interface between classical and quantum systems.

It is the task of the invention to provide an efficient framework for managing and distributing entangled quantum states.

This object is solved by the features of the independent claims.

Throughout the invention, it is to be understood if an entity performs certain steps that it can have a processing unit or it can be associated to a processing unit that is configured to perform those steps. If technical possible, those entities can also be realized as software modules.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter-changeable under appropriate circumstances and that the embodiments of the invention described herein are capable of operation in other sequences than described or illustrated herein.

According to a first aspect of the invention a High-Level Abstraction Layer for managing quantum communication and classical communication is disclosed, comprising
- a classical abstraction layer, in particular a classical API, configured to interact with applications, in particular with the classical part of quantum applications, using classical protocols;
- a quantum abstraction layer, in particular a quantum Push Interface, configured to interact with quantum communication protocols by exposing quantum states stored in a quantum memory;
- a routing module configured to send a command to expose at least one quantum state to a quantum memory, wherein the command comprises a communication address of the quantum communication protocol to which the quantum state of the quantum memory shall be exposed.

This offers significant technical effects and advantages by providing a modular system that unifies quantum and classical communications, allowing for seamless integration into existing network infrastructure. The dual-layer design - comprising a classical API for conventional data and a quantum push interface for quantum states enables smooth interactions between classical applications and quantum protocols without complex architectural changes. Through centralized control by a routing module, the system efficiently manages the distribution of entangled quantum states, targeting specific quantum protocols as needed. This streamlined process not only optimizes network resource usage but also enhances security, as it facilitates controlled, authenticated access to quantum resources.

Furthermore, the system's design supports time synchronization across classical and quantum components, ensuring precise delivery and utilization of quantum states within their coherence time. By enabling telecom providers to integrate quantum functionalities gradually, the invention reduces operational barriers to scaling quantum communication services, thus making advanced quantum networking more accessible and practical for a variety of applications like quantum cryptography.

A further technical effect is that it prevents direct contact between the quantum memory and external applications when exposing quantum states. Instead, the quantum memory receives commands solely through the routing module. This indirect access acts as a protective shield for the quantum memory, minimizing its exposure to potential errors or security threats from application-level interactions. By isolating the memory in this way, the system enhances its operational integrity, reducing the risk of accidental disruptions or unauthorized access, which is crucial for maintaining the fidelity of entangled states stored in the memory. This design choice thus ensures greater stability and security for the quantum memory, contributing to a more robust and reliable quantum communication network.

The high-level abstraction layer can further comprise the feature that the classical API includes a security mechanism for authentication, authorization, and accounting (AAA) to ensure secure access to the quantum communication services. This has the following effect and advantages: By adding security features such as AAA, the high-level abstraction layer provides controlled access to sensitive quantum states, ensuring that only authorized entities can retrieve and utilize quantum information. This improves security for quantum communication networks.

The high-level abstraction layer can further include a load balancing module configured to monitor the usage of the quantum and classical communication interfaces, balancing the load on the quantum and classical APIs to prevent overloading and ensure efficient operation. The effect and advantages of this feature are that it optimizes system performance, ensuring that high traffic does not degrade the functionality of the quantum or classical communication systems, making the network more reliable during periods of heavy use.

Additionally, the high-level abstraction layer can be equipped with a monitoring module that continuously tracks the performance of both classical and quantum interfaces, detecting any anomalies or malfunctions in real-time. This feature provides enhanced fault detection and early warning capabilities, allowing for proactive intervention before failures impact the network, thus improving the overall reliability of the system.

According to a second aspect of the invention, a network node for managing and/or distributing entangled quantum states is disclosed, comprising:
- a quantum memory configured to store and/or to expose entangled quantum states, including entangled photons; the quantum memory can expose quantum states via a quantum interface, in particular quantum Push Interface;
- a classical metadata memory configured to store metadata associated with the entangled quantum states in the quantum memory, wherein the metadata includes information such as the physical storage address within the quantum memory, a logical identifier, and/or a coherence time of the entangled quantum states;
   ∘ the classical metadata memory can obtain the metadata by requesting this information from the quantum memory or the information is pushed from the QM (quantum memory) to the MM (metadata memory) directly during the storage process. In an embodiment, it can use a protocol conversion module to communicate with the quantum memory;
- wherein the classical metadata memory is configured to expose the metadata in a classical format accessible through classical communication protocols.
   ∘ the classical metadata memory is associated to a classical interface, in particular a classical API that can be realized by means of the High-Level Abstraction Layer that enables applications to request the metadata and/or to request the exposure of a photon for quantum applications. The latter request is then communicated over the classical interface to the quantum memory that exposes the quantum state via its quantum interface;

Using photons has the advantage that they can be delivered by means of currently implemented to the communication networks, in particular fiber optics.

This network node allows for the storage of entangled quantum states, such as photons, in the quantum memory. The classical metadata memory stores important metadata such as the physical storage location, logical identifier, storage time and/or coherence time of these quantum states. By exposing this information in a classical format, classical telecommunication systems can easily interact with quantum components. This feature enables the existing classical networks to support quantum communications with minimal modification, making it a cost-effective and scalable solution.

In an embodiment, the network node further comprises the High-Level Abstraction Layer described above. In particular, the routing module can communicate with multiple quantum memories and route the command to expose at least one quantum state to one of these quantum memories.

By incorporating the high-level abstraction layer, the network node benefits from additional protection and streamlined access to the quantum memory, as the abstraction layer prevents direct interactions from external applications. This shielding of the quantum memory reduces the risk of accidental interference or unauthorized access to the stored quantum states, preserving the integrity and coherence of entangled states. Furthermore, the abstraction layer allows the network node to handle both quantum and classical interactions seamlessly, making the quantum data readily usable by classical applications without requiring complex quantum-specific adaptations. This results in a more reliable, accessible, and secure platform for distributing entangled quantum states across a network, supporting advanced quantum communication protocols while minimizing operational complexity.

In an embodiment, the entangled quantum states are photons. A telecommunication network can be configured to transmit these photons over existing telecommunications infrastructure to users of quantum communication protocols.

By specifying that the entangled quantum states are photons, this feature highlights the system's capability to transmit quantum information through existing fiber-optic infrastructure used by telecommunication providers. This compatibility with existing networks enables operators to offer quantum communication services without the need for significant investment in specialized infrastructure, reducing the cost and accelerating the deployment of quantum communication technologies.

The network node for managing and distributing entangled quantum states can further comprise a consistency checking mechanism configured to verify the consistency between the quantum memory and the classical metadata memory, ensuring that the metadata accurately reflects the stored quantum states. The effect and advantages are that it ensures the classical metadata memory always correctly reflects the quantum states in the quantum memory. This reduces the risk of mismatches, which could otherwise lead to errors in retrieving or distributing the entangled states.

The network node can also include a data redundancy mechanism to maintain copies of the metadata in multiple classical memories to ensure availability in case of memory failures. This feature improves the resilience and reliability of the system, ensuring that metadata is available even if one memory unit fails, preventing system downtime or loss of critical information about stored quantum states.

According to a third aspect of the invention, a redundancy module for managing the distribution of entangled quantum states is disclosed, comprising:
a means for triggering the release of at least one error-corrected state, in particular multiple entangled photons, from the quantum memory in response to a retrieval command, wherein the error-corrected state is configured to compensate for potential decoherence within the quantum memory, such that at least one photon remains suitable for use by a quantum communication protocol. The redundancy module is designed to work with error-corrected or logical states, providing flexibility in the choice of quantum states. The specific method of error correction is not critical to the scope of this invention, allowing the use of various state types, such as cluster states or GHZ states, to support quantum communication protocols.

This redundancy module design addresses the challenge of quantum state degradation within the memory due to limited coherence time, it also addresses compensation of transmission errors (during entanglement distribution, but also when transferring states to the user). By releasing multiple photons upon retrieval, the module increases the likelihood that at least one photon will remain in a usable entangled state when reaching the application, thereby improving the reliability of quantum communication protocols dependent on stable entanglement. This approach enhances the robustness of quantum memory operations, providing a practical method to counteract the inherent limitations of quantum state coherence within storage environments.

In the context of the redundancy module, the retrieval command to release entangled photons from the quantum memory can typically be sent by a control system or abstraction layer that manages the access and distribution of quantum resources to applications. This control system serves as an intermediary, coordinating between the quantum memory and the quantum applications to handle requests efficiently.

To manage the number of entangled photons released, the control system or abstraction layer can dynamically adjust the quantity of photons triggered based on the coherence conditions of the quantum memory. The control system can adjust the emission of an error-correctable quantum mechanical stat. If there is a risk that photons are in a decoherence state (meaning their entanglement has deteriorated), the system can automatically increase the number of photons released in response to each request to ensure that some photons remain in a usable entangled state.

If a quantum application receives too many photons in a decohered state, it compromises the application's effectiveness, as decohered photons no longer maintain the necessary entanglement. The control system, therefore, monitors the fidelity of the quantum memory, estimating the coherence status of stored entangled photons. Based on this fidelity data, the system can:
1. Regulate the Frequency of Requests: If fidelity is low, the control system may temporarily limit retrieval requests to prevent the application from receiving decohered photons.
2. Increase Photon Redundancy: When retrievals are necessary, the system can compensate by triggering a higher number of photons to increase the chance that at least some remain in a suitable entangled state upon delivery.

This dynamic adjustment ensures that the quantum memory is used efficiently, allowing the applications to rely on a higher quality of entangled states and reducing the likelihood of wasted decohered photons. Additionally, this approach provides a feedback mechanism where the control system continuously assesses memory conditions and adjusts retrievals to align with the current coherence state, enhancing the overall stability and reliability of the quantum communication system.

In an embodiment, the redundancy module adjusts the number of entangled photon pairs distributed based on feedback received from the quantum communication protocol regarding the entanglement success rate.

By sending multiple entangled photon pairs and adjusting their number based on network conditions, the system increases the probability that at least one entangled pair will arrive in a usable state. This feature enhances the robustness and reliability of quantum communications, making them more viable for real-world applications. The feedback helps to find the optimized number of photon pairs to be sent.

The redundancy module for managing the distribution of entangled quantum states can include an adaptive mechanism that adjusts the number of redundant photons dynamically based on real-time measurements of link quality and error rates. The effect and advantages of this feature are that it ensures a sufficient number of entangled photons at the receiving network nodes.

Additionally, the redundancy module can incorporate a predictive analytics engine that leverages historical data and machine learning algorithms to anticipate network issues and adjust the number of redundant photons proactively. This feature further enhances the reliability of quantum communications by preemptively addressing potential weak points in the network before they impact the transmission.

According to a further aspect of the invention, a feed-forward control module for managing the distribution of entangled quantum states to a quantum storage device is disclosed, comprising: a means for regulating the number of entangled photon pairs sent to the quantum storage device, wherein the regulation is based on network conditions and the fidelity of the quantum storage, to ensure sufficient entangled photons are available for retrieval by quantum communication protocols. In classic networks, an Origin Destination Matrix (with data volumes to be transported) is used with the need for the network to be able to derive the corresponding traffic. This can be transferred to the present case: Corresponding OD matrices can also be proposed for quantum communication protocols, which require corresponding amounts of entangled states to be applied by the system.

This proactively adjusts the number of entangled photons stored, accounting for the quantum memory's coherence time and current network conditions, rather than introducing redundancy in distribution. The advantage is that the module ensures a reliable supply of entangled states in the quantum memory, supporting consistent performance of quantum applications despite the natural decay of entanglement and network limitations. This proactive approach enhances the overall stability and usability of entangled states for applications reliant on timely and reliable quantum data access.

According to a fourth aspect of the invention, a time synchronization system for synchronizing components within a quantum communication network is disclosed, comprising:
- a clock configured to synchronize with quantum memory, quantum applications, photon sources, and/or classical communication components, in particular by using a Precision Time Protocol (PTP) until a rate of 1GHz;
- means for assigning time bins to entangled quantum states based on synchronized time stamps from the clock; the means can also send the time bins to the quantum applications;
- an algorithm configured to compute time delays and binning intervals for ensuring a coherent retrieval and distribution of entangled quantum states across the network.

This time synchronization system ensures that all elements of the quantum communication network, including quantum memories and photon sources, operate on a synchronized timeline. By assigning time bins to each quantum state and computing delays, the system ensures that entangled quantum states are retrieved, stored and distributed within their coherence time and that the entangled quantum states can be set in relation to each other.

In an embodiment, the time synchronization system is further configured to calculate time bin identifiers for each entangled quantum state stored in the quantum memory, wherein the time bin identifier is stored alongside the metadata in the classical metadata memory. Each time bin has a number that is calculated. A photon that is stored in a time bin is therefore assigned a time bin number. This time bin number is used to calculate the corresponding identifier for two entangled photons at different locations (without additional communication between the endpoints).

By assigning time bin identifiers to each stored quantum state and recording them in the classical metadata memory, the system ensures that quantum states can be precisely tracked and retrieved in a timely manner. This process is crucial for maintaining the coherence of the quantum states and enables more reliable quantum communications.

The time synchronization system can further include a fine-grained control mechanism that adjusts the synchronization precision based on the quantum state's coherence time and the distance between network nodes. This feature ensures that synchronization precision is always tailored to the specific requirements of the system, improving reliability in situations where long distances or short coherence times might otherwise degrade the accuracy of quantum state retrieval. An Optical Time Transfer (OTT) link can be configured to transmit time signals with higher precision than Precision Time Protocol (PTP), wherein the OTT link provides an additional classical connection between two locations to support enhanced time synchronization for quantum communication systems.

This feature emphasizes the OTT's superior precision in time signal transfer and its role as an auxiliary classical connection to boost synchronization accuracy across distributed quantum systems.

The time synchronization system can also include a backup clock module that takes over synchronization tasks in the event of failure of the primary clock. The effect and advantages of this feature are that it provides redundancy at the synchronization level, ensuring that quantum communications remain uninterrupted even if the primary synchronization clock fails.

Moreover, the time synchronization system can include a multi-source synchronization protocol, allowing the system to synchronize with multiple clocks from different sources to ensure a more accurate and resilient timing solution. This feature enhances the fault tolerance of the network and ensures that even if one synchronization source fails, others can maintain network timing.

According to a fifth aspect of the invention, a distribution system for distributing entangled photons across a quantum communication network is disclosed, comprising:
- at least two quantum memories located at different network nodes, each configured to store entangled photon pairs;
- at least two metadata memories located at the respective network nodes, configured to store metadata associated with the stored photons, including logical identifiers and time stamps; the logical identifier can consists of time stamps, and
- a classical communication channel between a QM and a MM within their respective network node that enables a communication between the QM and the MM.
-

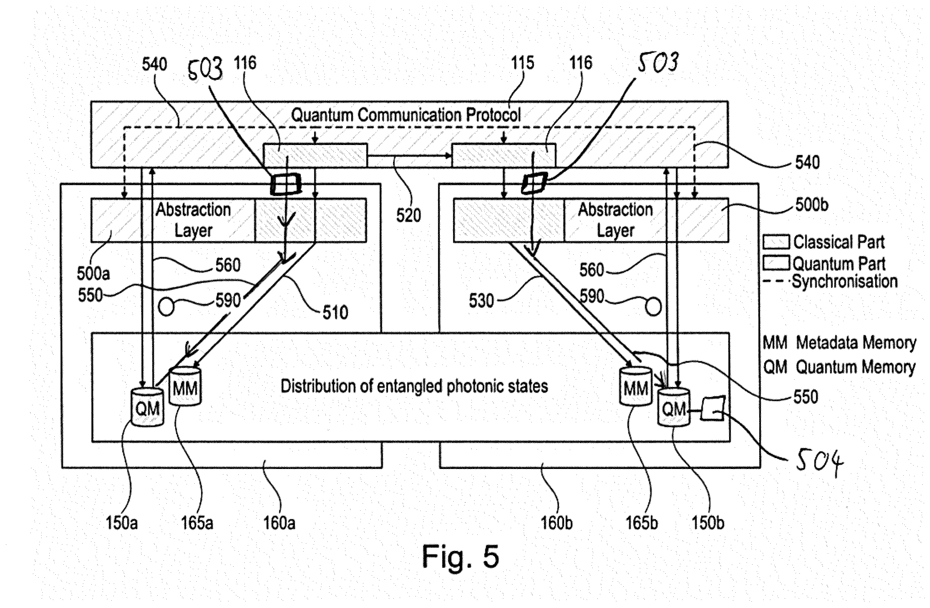

The distribution system can comprise a photon selection protocol configured to expose entangled photon pairs from quantum memories based on metadata stored in the metadata memory. Details are illustrated in Fig. 5.
- the distribution system can also comprise the routing module configured to send a command to expose at least one quantum state to a quantum memory, wherein the command comprises a communication address of the quantum communication protocol to which the quantum state of the quantum memory shall be exposed;
- the distribution system can also comprise the high-level abstraction layer described above;

This distribution system allows entangled photon pairs to be efficiently distributed across a quantum network by leveraging quantum memories and metadata memories located at multiple network nodes. The photon selection protocol ensures that the correct photon pairs are retrieved and exposed based on their associated metadata, improving the precision and reliability of photon exposure in quantum communications.

The photon selection protocol is responsible for selecting, retrieving, and/or transmitting entangled photon pairs from quantum memory to user applications. In a preferred embodiment, the protocol may begin by querying the classical metadata memory for information such as the physical storage address, logical identifier, and/or coherence time of the photon pairs. This allows the system to determine the viability of photon pairs based on their metadata, ensuring that only valid pairs are retrieved. The selection protocol is a classic protocol of the High Level Abstraction Layer, while the routing module manages the communication from the HLAL to the QM. Upon exposure, each entangled photon pair may be marked as "deleted" in the metadata storage, preventing re-use, as verification of a quantum state can result in its decoherence.

This feature provides a robust mechanism for managing quantum state fidelity. Marking each exposed photon pair as deleted prevents inadvertent re-use of potentially decohered states, ensuring that only high-integrity quantum states are provided to applications. This process ultimately improves the accuracy and stability of quantum communication protocols by supporting more consistent state availability and reducing the risk of delivering degraded quantum states to applications.

In some embodiments, the photon selection protocol can incorporate time synchronization, assigning retrieved photon pairs to time bins aligned with a global clock. This ensures that photon retrieval occurs within the coherence time, minimizing the risk of losing the entangled state. This also enables the synchronization process between applications by allowing them to identify and utilize corresponding photon pairs independently, based solely on pre-assigned time slots. This reduces the need for continuous communication between distant locations, which enhances efficiency, minimizes latency, and improves the overall reliability of quantum state utilization across distributed applications.

Once the photons are selected and their expose time is synchronized, the protocol can send a retrieval command enabling the exposure of the photon pairs via a quantum channel to the user application.

In another preferred embodiment, the protocol may coordinate with partner nodes when entangled photon pairs are stored across multiple network nodes. Logical identifiers are used to synchronize retrieval across nodes, ensuring that both photons are transmitted simultaneously without loss of entanglement.

After transmission, the protocol may perform a cleanup process by erasing metadata entries for the used photon pairs from the classical memory, preventing their reuse and maintaining data integrity.

The distribution system for distributing entangled photons can be enhanced by incorporating a load balancing module that exposes photon retrieval requests across multiple quantum memories to optimize network performance. The load balancing module is integrated into the quantum output API, configured to manage the exposure of entangled photons to users. The effect of this feature is that it prevents bottlenecks by distributing tasks more evenly across available resources, ensuring efficient and timely retrieval of entangled photon pairs, even in high-demand scenarios.

The exposure distribution system can further incorporate dynamic route optimization, where photon distribution routes are adjusted based on real-time network conditions, ensuring the most efficient transmission of entangled photons to users. The effect and advantages of this feature are that it allows the system to adapt to changing network conditions such as congestion or link failures, ensuring reliable delivery of entangled photons without delay.

According to a sixths aspect of the invention, a cleaning control system for a metadata memory in a quantum communication network is disclosed, comprising:
- a metadata memory containing logical photon identifiers (LP-ID) and physical storage identifiers (Phy-ID) associated with stored entangled quantum states;
- an erasing means configured to mark the data already exposed by the metadata memory (MM) as used or to immediately delete the data entries from the metadata memory.
   ∘ this ensures that once a quantum state has been exposed, it is either marked as "used" or deleted, preventing any accidental re-use of decohered or invalid states. By systematically managing the lifecycle of each quantum state in the metadata memory, this erasing means enhances data integrity, reduces the risk of errors in quantum communication protocols, and ensures that applications receive only valid, unexposed quantum states. After the metadata entry in the metadata memory (MM) is deleted, no further actions are required in the quantum memory (QM). The quantum state is simply considered invalid. The quantum memory is configured to automatically overwrite the physical storage location after the coherence time of the quantum state has expired.

According to a seventh aspect of the invention, a method for exposing entangled quantum states is disclosed, comprising:
- storing entangled quantum states in a quantum memory at a network node;
- storing metadata associated with the quantum states in a classical metadata memory, wherein the metadata includes a physical storage address, a time slot identifier and a logical identifier;
   ∘ the system can employ a Logical Identifier to select a quantum state and mark it as "used" in the metadata memory (MM), ensuring proper tracking of its usage. A Physical Identifier can be utilized by the routing module to trigger the retrieval of the quantum state from the quantum memory (QM). Additionally, a Time Slot Identifier can be used to specify the timing for retrieving the quantum state. The Time Slot Identifier assigned during storage is incorporated into the calculation of the Logical Identifier, which ensures unique naming and prevents duplication of identifiers.
- requesting the entangled quantum states from the quantum memory via a classical API;
   ∘ A requesting command can be issued via a classical API, prompting the quantum state to be delivered at a specified time slot through a one-way, push-only quantum API (Q-API). This configuration ensures controlled, time-specific delivery of quantum states while maintaining simplicity and security in data transfer. The one-way, push-only nature of the Q-API prevents reverse access to the quantum system, reducing potential interference or unauthorized access. Additionally, the use of timeslot scheduling optimizes the coordination of quantum state availability for applications, increasing efficiency and reliability in quantum communication protocols.
- exposing the entangled quantum states to users of a quantum communication protocol over a quantum communication channel.

This general method outlines the core process of storing, retrieving, and exposing entangled quantum states. The method integrates both classical and quantum elements, allowing metadata associated with quantum states to be handled via a classical metadata memory and the quantum states themselves to distributed through a quantum API during defined time slots. This hybrid approach provides a scalable and flexible framework for deploying quantum communication services over existing networks.

In an embodiment, the method further comprising retrieving the metadata from the classical metadata memory via a classical API before retrieving the entangled quantum states from the quantum memory.

This feature enables the retrieval of metadata associated with entangled quantum states through a classical API. This allows for the interaction between traditional classical systems and the quantum components, simplifying integration and enhancing the usability of quantum communication services.

In an embodiment, the method further comprising performing time synchronization between the network node and user applications to ensure that the entangled quantum states are retrieved within their coherence time and that applications and the network services share a common clock and common time slicing - so that entangled photon pairs can be matched at different network nodes.

By synchronizing the retrieval process, this feature ensures that quantum states can be delivered within their coherence time from the QM to the user application. This synchronization enhances the reliability and effectiveness of the system.

In an embodiment, the method further comprising converting the retrieval request from a classical communication protocol into a quantum protocol using a protocol conversion module to facilitate the retrieval of the entangled quantum states from the quantum memory.

This step involves converting classical communication requests into quantum signals, enabling seamless interaction between classical systems and quantum memories. The protocol conversion module enables users to interact with the quantum memory of a telecommunications provider without requiring direct quantum capabilities. This allows users to execute quantum protocols locally on their premises while relying on the module to facilitate seamless interaction with the quantum memory, ensuring that photonic signals are exposed efficiently and without the need for specialized quantum infrastructure.

In an embodiment, the method further comprising applying redundancy means to expose multiple entangled quantum states, in particular based on network conditions, including the length of the communication path, properties of the communication link, and/or the coherence time of the entangled quantum states. The redundancy in the output via the Q-API is necessary because there is uncertainty regarding the state of the entangled photons at the time of retrieval. Specifically, there is no guarantee that the photons are still stored in memory, remain entangled, or have been accurately preserved in storage. These are potential errors that cannot be controlled directly. Therefore, quantum error correction is required, with the simplest approach being to expose N entangled photon pairs instead of a single pair. This type of redundancy is intended to increase the likelihood that at least some of the photons are in a usable state for quantum communication protocols.

By applying redundancy, this method ensures that quantum communications are more reliable, particularly in challenging network conditions. The exposure of multiple entangled photon pairs increases the probability that a usable entangled state will be successfully delivered to the end user, compensating for potential losses due to coherence time limits or network noise.

The method can also incorporate a classical feedback loop between the user application and the quantum memory, allowing real-time feedback to adjust timing parameters or request additional photon pairs if necessary. This feature provides more control to the user and ensures that the quantum communication process is both flexible and reliable.

In an embodiment, the method further comprising a network controller configured to manage and configure the network by monitoring network conditions, controlling access to quantum channels, and automatically rerouting quantum states through alternative channels in the event of a channel failure.

This provides a centralized management feature through a network controller, which ensures continuous, uninterrupted operation of the quantum network. By monitoring network conditions in real time, the controller can adjust the flow of quantum states to bypass any disruptions, thereby increasing the reliability and resilience of the quantum communication system. Automatic rerouting mitigates potential downtimes, making the system more dependable for users and applications requiring consistent entanglement-based services.

By enabling a telecommunications operator to manage the controller as a service, this claim allows the quantum network to leverage existing infrastructure for network-wide control, monitoring, and rerouting. This service-based approach reduces the need for users or enterprises to maintain individual control systems, offering them high-quality, centralized management through a provider. It also allows the operator to dynamically optimize network traffic based on user demand and channel availability, leading to scalable, reliable, and cost-effective quantum communication services. The system ensures that the telecommunications provider does not require trust from the user. The provider is responsible solely for distributing the entangled states, while the user independently utilizes these states for quantum protocols. The provider does not have visibility into or involvement with how the user employs the distributed entangled states, preserving the user's privacy and autonomy.

In the following, preferred implementation examples of the present invention are explained with reference to the accompanying figure:
- Fig. 1:: shows an architecture of a Quantum Internet Node;
- Fig. 2:: shows the architecture of Fig.1 expanded via different quantum network nodes;
- Fig. 3:: shows techniques for time synchronization;
- Fig. 4:: shows a photon storage process in the quantum storage and classical metadata storage and a computation of a logical photon identifier;
- Fig. 5:: shows photon selection and a read-out protocol;
- Fig. 6:: shows a metadata memory cleaning procedure plus a procedure to select an entangled photon pair at the network nodes A and B;
- Fig. 7:: shows a triggering process of the photons;
- Fig. 8:: illustrates the interplay of two quantum internet nodes to orchestrate and conduct a Bell State measurement to check the entanglement of their persisted photons;
- Fig. 9:: shows a feed-forward control module;
- Fig. 10:: shows a load balancing module;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

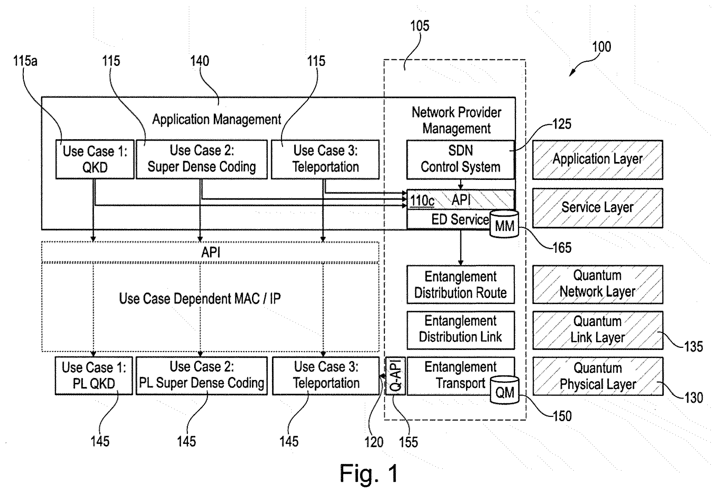

Fig. 1 describes an inventive architecture of a Quantum Internet Node 100 having the task of Entanglement Distribution as a Service (EDaaS).

The architectural elements of the entanglement distribution service can be setup in a "Network Provider Management" employment 105. Users of quantum communication protocols, such as quantum key distribution, super-dense coding, or teleportation, utilize the entangled quantum states, in particular entangled photons, stored at different locations. For this purpose, the Entanglement Distribution Service (EDaaS) provides dedicated interfaces as APIs 110c,q that fulfill various services.

At the service level, a classical API 110c is provided through which quantum communication applications 115a, b can obtain the logical and physical addresses of the stored quantum mechanical states. The API 110c also enables the triggering of one or more quantum mechanical states based on a physical storage address, which are then exported via a photon push-interface over a quantum channel 120. Additionally, the classical API 110c can provide AAA functionality (authentication, authorization, and accounting for the application) to manage access to the EDaaS service. According to a further aspect of the invention, a third function of the API 110c is to provide an interface for time synchronization of the application systems relative to the EDaaS service. Through this interface, users' clocks can be synchronized with the clocks of the distribution service, allowing the assignment of photons to specific time slots as will be described in more detail below.

According to Fig. 1, the Entanglement Distribution Service is managed across network nodes via a Software Defined Network 125 (SDN) or an Entanglement Distribution App. For this purpose, the SDN service configuration features monitoring means, alarming means, and means that ensure that every node provides sufficient entangled states.

A quantum physical layer 130 of the EDaaS service comprises quantum optical elements (photon sources, fibers, beam splitters, single-photon detectors, frequency converters, or quantum memories). A link layer comprises end-to-end quantum optical connections, through which entangled photonic states can be distributed between any nodes of the quantum network. A routing layer comprises optical components that enable dynamic changes of quantum links over various optical paths/links.

For the different use cases, in particular within the respective UEs (user equipment), quantum communication protocols are implemented through applications. Such an application can comprise a classical (logical) component at the application management level and a quantum physical component at the physical network level. Commands of the application-level 115 control the elements of the physical level, where the quantum physical effects are executed inside the boxes 145. The physical level of the applications consumes the quantum mechanical states, which are stored in the quantum memory 150 of the Network Provider Management and are exposed to the users via a quantum mechanical API 155 (Q-API).

The Network Provider Management employment 105 as illustrated in Fig.1 has not been described before to our knowledge.

One aspect of the invention is the integration of the quantum memory 150 (QM) and the metadata memory (MM) 165 in the Entanglement Distribution architecture 100 and/or the integration of the QM into a classical telecommunications service for the provision of quantum mechanical states to quantum communication protocols.

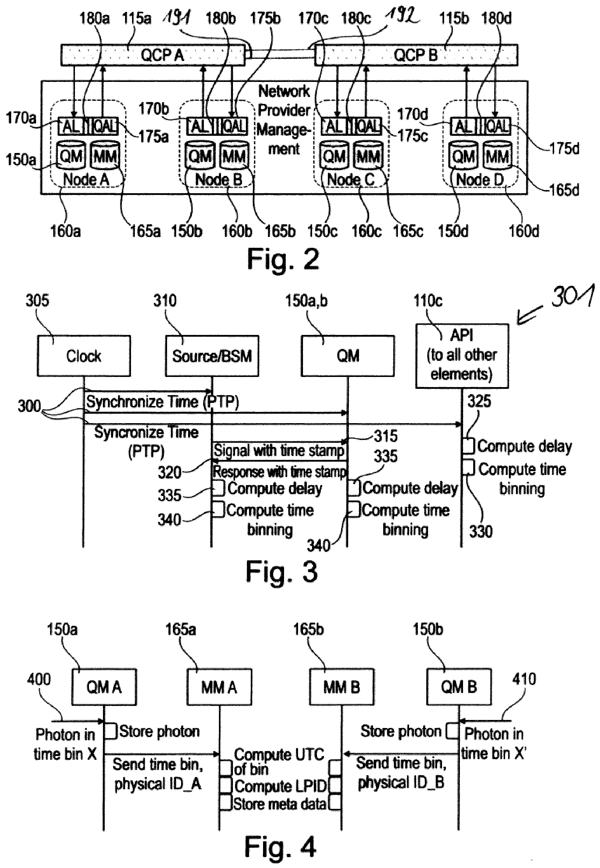

Fig. 2 shows the Network Provider Management 105 employment of Fig.1. The illustration of Fig. 2 is rotated compared to the illustration in Fig. 1, but this does not result in any functional changes.

Fig.2 shows four network nodes 160a-d each having a respective Quantum Memories 150 a-d (QM), classical Metadata Memories 165a-d (MM), Abstraction Layers 170a-d (AL) and/or Quantum Abstraction Layers 175a-d (QAL). Quantum Communication Protocol 115a interacts with the network node 160a and the network node 160b by using the respective abstraction layer 170a,b using a classical interface so that the respective network nodes 160a,b expose a set of entangled quantum states to the quantum communication protocol 115a via the respective quantum abstraction layer 175a,b. The entangled set of photons and can then be used for the use cases described above. The technical implementation of quantum communication protocol 115b is done in an analog way, whereas the quantum communication protocol 115b uses the network nodes 160c,d. The classical abstraction layer 170 can be realized by the classical API 110c. The quantum abstraction layer 175 can be realized by the quantum API 175. Fig. 2 also shows a classical communication channel 191 and/or a quantum communication channel 192 that enable the applications to communicate with each other.

Photonic quantum states are stored in the quantum memories 150a-d (QM) at each network node160a-d. Respective photons stored in one network node 160a are assumed to have a high degree of entanglement with partner photons being stored in another network node 160b-d, i.e., two photons stored in quantum memories at node 160a A and node 160b B may be entangled. The coherence time of the QM defines the storage duration of the entangled photons. The longer the coherence time is, the higher is the probability that these two photons are still in an entangled state after a certain time has passed. Only those photons which are still in an entangled state are useful for the quantum communication protocols.

A new aspect of the invention is the usage of both a classical memory 165 as metadata memory 165 and the quantum mechanical memory 150 to store, to inventory, and/or to expose distributed entangled photonic states to users. In particular, the interaction of the metadata memory (MM) 165 and the quantum memory 150. In particular, the metadata memory 165 mirrors the information of the quantum states inside the quantum memory 150 so that by using classic APIs 110c, which means non-quantum APIs, applications obtain information and request the exposure of quantum states easily with current classical protocols.

The method according to the invention can be implemented as a modular architecture. In this context, "modular" means that the generation and distribution of entangled states is the responsibility of a service provider, in particular a telecommunication provider, while a user can utilize the states to execute various quantum communication protocols. Novel aspects of the invention are, for example, a metadata database, an abstraction interface, and/or the method for reading and writing states from the quantum memories with subsequent provision to the user side.

The QM 150 is a device to store, select and/or expose photonic quantum states.
- Storage: entangled photons are stored in the QM 150. This procedure requires the QM to expose a physical storage address to the MM after successful storage of a photon. However classical IT system are in general not compatible to communicate directly with the QM 150. It is clue of the invention that for this communication the respective metadata memory 165 with its classical API 110c is used.
- Selection and/or Read-out: the QM 150 must be capable of releasing a certain stored entangled photon based on a physical storage address to the user or to the respective quantum communication protocol 115a,b. The quantum states should not be changed by the storage and selection process.

QMs do already exist in laboratories. QMs are currently limited by the coherence time to preserve quantum states in memories. The physical address can be a sequential number of a quantum dot or color centrum. Alternatively, the address could be a dedicated ion in a particle trap.

The (Classical) Metadata Memory (MM) 165 interacts with the quantum memory 150 within a network node 160. It associates or mirrors metadata with each quantum state stored in the quantum memory in form accessible to common classical non-quantum-mechanical protocols. This comprises a 1:1 relationship, meaning that exactly one record in the metadata storage is assigned to each stored quantum-mechanical state within the quantum memory 150.

The data associated with the quantum state QM in the metadata memory 165 comprise:
- Physical address in the quantum memory / Quantum dot address (PhyID);
- Logical ID of the stored photon pair (LPID);
   ∘ The Logical ID can be considered as being the name of a first quantum mechanical state so that it can be compared with the Logical ID of a second quantum mechanical state in order the evaluate if the states have been generated as an entangled pair;
- Generation timestamp, Time tag and/or Lifetime (valid until time X);
   ∘ The lifetime can be the coherence or a function of the coherence time;
- Wavelength or Frequency, and/or
- an ID of the partner node.

With this metadata, it is possible to identify an entangled state based on its properties such as frequency or partner node and trigger its expose from the quantum memory using its physical address. The logical processes of the control layers between the application level, network level, and quantum memory all operate through the metadata memory 165 by using the abstraction layer 170. High-level-Abstraction Layer 170,175a-d: The High-level-Abstraction Layer 170,175 can comprise the classical Abstraction Layer 170 and the Quantum Abstraction Layer 175. The High-level-Abstraction Layer 170,175 can comprise a routing module 503 (shown in Fig.5) configured to send a command to expose at least one quantum state to a quantum memory, wherein the command comprises a communication address of the quantum communication protocol to which the quantum state of the quantum memory shall be exposed. Additionally, a processor can be set up within the High-level-Abstraction Layer 170,175 that enables the proceeding of the necessary steps described below. For example i) if a new quantum mechanical state is stored within the quantum memory 150 it can communicate the before mentioned associated data with the quantum state and store it within the metadata memory 165, and/or ii) if the quantum communication protocol 115 requests the exposure of a entangled quantum state by means of classical protocol to the classical Abstraction Layer 170, the respective information can be looked up in the metadata memory 165, wherein the request for the exposure of certain entangled state is sent by means of the classical protocol to the QM, wherein the quantum memory 150 can then expose the requested entangled quantum mechanical state.

With quantum and metadata memory, interaction is facilitated through the High-level-Abstraction Layer 170,175. This High-level-Abstraction Layer 170,175 provides a well-defined interface for the classical (API) and quantum communication components (Q-API). Functionalities of the High-level-Abstraction Layer 170,175 can include authentication and rate limiting for the requesting parties on the customer side, as well as monitoring and configuration interfaces for the provider side.

Possible quantum protocols that can be used within the context of the invention are known to the person skilled in the art but can also be found under https://wiki.veriqloud.fr/index.php?title=Protocol_Library.

The quantum communication protocols and/or the quantum applications need a pair of quantum states, in particular photons, which are in an entangled state with each other. Therefore, according to another aspect of the invention techniques are provided to ensure that entangled photons are distributed. Furthermore, as the coherence time correlates only to a probability that the quantum states are still in an entangled state it is beneficial to apply redundancy measures because one can never be 100% sure that two quantum states are still entangled. A possible redundancy measures is to expose more than one photon.

The distribution of entangled photons can utilize a well-defined time binning system for synchronization. The distribution system can be trained in advance and maintains proper time using feedback loops during the entanglement distribution process. As a result, the QM 150 can assign a proper time tag to each photon and can also expose the time tag with the physical storage address to the network node's 160 MM 165. A synchronization between the corresponding elements and the calculation of delays and time slots (Time Binning) via a Precision Time Protocol (PTP) is illustrated in Figure 3.

The following description is assumed to work with a quantum state distribution state, in particular photon distribution rate, of 1GHz which results in a time precision better than 1 ns shall be sufficient. For this use case the well-known "White Rabbit" and "PTP" protocols work. For higher distribution rates, a better time synchronization technique like Optical Time Transfer (ELSTAB) can be used.

The method for Time Synchronization according to Fig. 3 of a time synchronization system 301 is described below:
In step 300: A clock 305 sends time synchronization messages to a quantum source 310, to the Quantum Memory 150 (QM), and to the classical API 110c using the Precision Time Protocol (PTP). This process ensures that all elements can be aligned to the same time. The classical API 110c can distribute the time synchronization message in principle to all other elements. To enable the time-triggered emission of photons, the API 110c also can exposes a time synchronization interface to the customer side. Synchronizing the components to a unified clock 305 helps prevent timing discrepancies. This coordination is essential for maintaining the coherence of quantum operations across the system.

The source 310 synchronizes its internal clock with the clock 305 using the PTP protocol. This ensures that any signals generated by the source 310 are marked with accurate timestamps.

The quantum memory 150 also synchronizes its clock with the clock 305 using PTP. This ensures that the QM is operating in a well-defined timing with the Source and other components.

All the other elements that have access to the time synchronization message via the API 110c can synchronize their respective clocks with the clock 305 using PTP that ensures a well-defined timing with all the other components of the system.

In step 315, the source 310 generates a signal with a time stamp and sends it to the Quantum Memory (QM). This signal includes a time stamp that marks the moment it was transmitted. Attaching the time stamp to the signal allows precise tracking of the signal's journey, helping to identify and correct any time-related transmission delays. This helps maintain the fidelity of quantum states during transmission.

In step 320, the quantum memory 150 sends a response signal back to the source 310, also marked with a time stamp that indicates when it received the initial signal. The response with a time stamp allows bidirectional time tracking. This ensures accurate measurement of the signal's round-trip time, which is critical for aligning quantum device communications.

In step, the API 110c or the respective other elements compute a time delay and in step 330 a respective time binning using the time synchronization message from the clock 305.

The quantum memory 150 and the source 310 compute in step 335 their respective time delay based on their respective signaling with the time stamps. Computing the delay helps detect and correct timing errors, which ensures that all quantum operations remain synchronized. This is essential for maintaining overall system performance.

In step 340, both the quantum memory 150 and the source 310 calculate "time binning," dividing time into smaller intervals (bins) to organize and categorize quantum events. Time binning improves the precision of quantum state processing and storage, making the operations of the quantum memory more efficient and time accurate.

The API interfaces with all elements of the system, processing the delay and time binning information. It distributes this data across all relevant components to ensure synchronized operations. Consumer like the quantum communication protocols can determine their time delay with respect to the quantum memory by exchanging based on respective signaling with the time stamps analog to the procedure described between the quantum memory 150 and the source 310. This also enables a common clock between applications and the network, allowing photons to be triggered at absolute times according to UTC.

After receiving a photon from the source 310, the QM 150 exposes the physical address of the stored photon (number of quantum dot, ion or diamond center) and the time bin identifier to the MM 165. If there are multiple quantum channels of the quantum memory 150, it is also capable of distinguishing different sources 310 from which the entangled state originates, for example, through wavelength differentiation, and additionally communicating this information to the metadata memory 165.

The metadata memory 165 can provide additional metadata such as frequency, timestamp indicating the generation of the photon, and/or lifetime (and hence the expiration date of an entangled pair due to decoherence) based on the time bin and the provided physical address along with the partner node. Additionally, the metadata storage can generate a unique logical ID used for identifying the record, i.e. the photon, and enabling retrieval later. Since the ID must be consistently generated across metadata storages, it can be derived from the time slot (absolute time) and the photon source 310 ID that generated the state. Each quantum memory (QM) is associated with a unique Physical Identifier (PhyID), which is included as metadata. However, the Logical Identifier (Logical ID) is calculated independently of the PhyID and is derived from the Time Stamp Identifier and the Partner Identifier, ensuring consistent and unique identification of quantum states across the network. The ID can be derived as follows: Logical ID = TimeStamp ID + Partner ID, wherein the "+" denotes a concatenation operation.

Fig. 4 illustrates the photon storage process as part of the Entanglement Distribution as a Service (EDaaS), a service provided by a telecommunications operator. This service facilitates the distribution of entangled photon pairs among network nodes and their storage in quantum memories, enabling efficient management and utilization of quantum resources within the network. Fig. 4 also shows the generation of associated metadata in the metadata memory 150.

Step 400: If a photon X arrives at the quantum memory 150a in time bin Xt, the quantum memory 150a communicates to the metadata memory 165a both the time slot Xt and the corresponding physical ID A, Partner ID A, within the QM 150a. The MM 165a is provided with data to determine from which quantum memory 150a this communication originated and how the quantum memory 150a is physically connected to other network nodes and/or photon sources 310. From this information, the metadata storage evaluates the logical id and stores the PhyID, frequency, partner information as metadata.

Step 410: The quantum memory 150b and the metadata memory 165b perform the analog steps described in step 400 but for a photon X'. In particular, the photons X and X' are an entangled pair of photons.

The following scenarios for each entangled photon pair in every time slot are possible:
1. Both photons are in their respective physical memory within the respective QM 150 on both network nodes 160 and are still entangled;
2. Both photons are in their respective memory slots on both network nodes 160 but are no longer entangled due to the time duration since their generation - the greater the coherence time, the longer the photons keep their entanglement;
3. One photon of the pair is in the QM 150a slot of network node 160a, while the slot of another QM 150b is empty, possibly because this photon was accidentally triggered from the quantum memory 150b;
4. Both respective QMs 150a,b slots are empty, for example, because the photons could not be stored.

Only in the first scenario, the photons are usable by a requesting quantum communication protocol.

In the following, the selection and the exposure processes are described.

The retrieval of a state is performed using the physical ID of the storage location in the QM 150, and by means of the High-level-Abstraction Layer and its corresponding abstraction interface. Using the physical ID for the retrieval request has the advantage that translation from the LP-ID to the physical ID needs not to be performed by the network nodes at the time of retrieval. The legitimacy of the request can be verified. Upon passing the verification, the photon state can be triggered from the storage location within the QM 150. Similarly, to the storing case, the correct retrieval of photons cannot guarantee that the photonic state still exists or that entanglement is achieved across both parts at the customer side.

Figure 5 shows steps of the photon selection and illustrates the read-out protocol according to a further aspect of the invention.

The quantum communication 115 communicates with the abstraction interface of the High-level-Abstraction Layer 500. The steps are as follows:
Step 510: Ask the High-level-Abstraction Layer 500a of network node 160a for any entangled state with partner B of network node 160b, retrieve from the MM 165a the logical ID (LP-ID) of the photon, the physical address (Phy-ID), and further metadata via the classical interface at node A 160a. It is important to note that the time of retrieval should be well within the coherence time of the photon pair to increase the probability that the photons are entangled. Once exposed, the states are set to "used" in the MM.

Step 520: The quantum communication protocol 115 shares the LP-ID of the photon A within MM 165a with the other network node 160b B by means of the classical interface of a High-level-Abstraction Layer 500b of network node 160b;

Step 530: Ask the High-level-Abstraction Layer 500b of network node 160b for the entangled state with the logical ID provided by network node 160 a. The corresponding information is stored within the MM 165b of network node 160b . And if a photon with the logical ID is present, retrieve the PhyID of the state and associated metadata from the MM 165b via the classical interface of the High-level-Abstraction Layer 500b.

Step 540: perform time synchronization of the network nodes 160a, network node 160b and/or the respective quantum memories 150a,b via the classical APIs 110c. The time synchronization process is a continuous operation running in the background, provided as part of the infrastructure. This ensures that clocks remain synchronized for a period of time without requiring constant updates. The dotted line in Fig. 5 represents the synchronization state, indicating the alignment of clocks across the system. If the respective elements performed a time synchronization before, it is possible to use this value to save time and computational resources. The system utilizes a quartz-based oscillator to maintain precise timekeeping, ensuring consistent synchronization across components by providing a stable and uniform frequency reference. However, such stored values should only have a certain lifetime of about one day, so that the respective time values are frequently updated.

Step 550: trigger the exposure of the photons by sending the trigger time and the PhyID to the quantum memories 150a,b of both network nodes 160a,b by using the respective classical API 110c, wherein the trigger request is sent to the respective QMs 150a,b, in particular by using the respective protocol conversion module to translate the trigger request into quantum protocols. The routing module 503 can be used to send the command to expose at least one quantum state to the respective quantum memory. The abstraction layer can check the legitimation of the request. The trigger time should lie well within the coherence time of the entangled pair of photons;
Step 560: the quantum memories 150a,b send the entangled pair of photons 590 via the respective quantum APIs 110q at the requested timeslot to quantum applications 116;
Step 570: the quantum applications 116 execute the quantum protocol 115 using the exposed entangled photons 590 for the quantum communication use cases;
Fig. 5 also shows a redundancy module 504 that can be associated to the QM 150, in particular implemented within the QM 150, for managing the exposure of entangled quantum states from a quantum memory, comprising: a means for triggering error-corrected states, wherein the error-corrected states are configured to compensate for potential decoherence within the quantum memory, such that at least one photon remains suitable for use by a quantum communication protocol. In particular Redundancy can be achieved by sending more than one entangled pair of photons to the consumer. The number of how many entangled passive photons are sent can depend on a function based on the length of the communication path to the consumer, properties of the communication link to the consumer, the coherence time of the photons and/or the elapsed time since their generation. For example, if the properties of the communication link yield to a higher level of noise or if the communication path is longer, this increases the likelihood that the photons will arrive at the consumer in a non-entanglement state. Hence, the number should be increased to provide sufficient redundancy. If on the other hand the coherence time of the photons is larger within the country memory, the number of the photons can be decreased. The consumer and the quantum memories can establish a feedback loop to optimize the number of entangled photon pairs which are transmitted due to redundancy. For example, if 10 entangled photon pairs are sent to the consumer and the consumer evaluates that typically 9 out of this 10 photon pairs are still in an entangled state, that number can be reduced. This is determined by the consumer, and the infrastructure provides the consumer with as many photon pairs as requested.

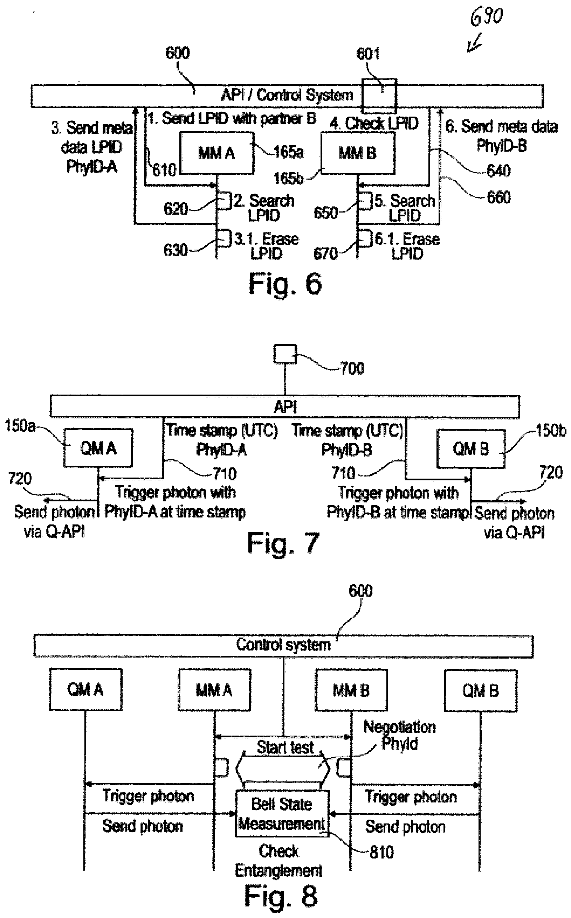

Figure 6 shows a memory cleaning procedure according to a further aspect of the invention of a cleaning control system 690.

Step 610: The High-level-Abstraction Layer 500a,b API of network node 160a receives a request from a API/Control system 600 to look up for an entangled photon pair inside network node 160a and network node 160b. Irrespective of the various designations, the elements High-level-Abstraction Layer 500, API 600 and API 110c are technically identical. Functionally it is the API that receives the request from the Application or the SDN.

Step 620: The MM 165a searches for a candidate Logical Photon ID (LP-ID) and returns the LD-IP and the physical photon ID (Phy-ID) back to the requester. The candidate Logical Photon ID is in particular a photon with a long duration within the QM 150a. The corresponding meta data is stored within the MM 165a.

Step 630: After exposure of the LD-IP and the Phy-ID both IDs are immediately erased from the MM 165a or flagged as used as described above;
Step 640: At the other network node 160b, this LP-ID is checked, by searching the respective LP-ID in the MM 165b of network node 160b in step 650. If successful, the Phy-ID of the photon of network node 160b can be returned to the requester in step 660. The control system then knows which Phy-IDs are free within both QMs 150a,b and can store a new pair of photons accordingly.

Step 670: Erasing the LP-ID and the respective Phy-ID from the MM 165b. Step 670 can be performed parallel to step 660.

It is important to note that the logical photon IDs are deleted from the classical metadata databases once they have been exposed. This ensures that a stored photon can only be used once. If the photon is not consumed by the application after retrieval, it expires within the coherence time in the quantum memory, and no special housekeeping activities are required.

For this cleaning process the IDs can be processed one after the other, starting from the beginning again when one has reached the end of the numbering.

Fig. 7 depicts a synchronous triggering of an entangled photon pair to quantum applications at quantum memories 150a,b.

Step 710: A consumer 700 requests the triggering of an entangled photon pair at a specific time stamps at two different quantum memories 150a,b via the classical API 110c. The trigger request has the time stamp and the respective physical storage IDs of the photons within the quantum memories 150a,b.

Step 720: At the proper time, the respective photons are triggered from the QMs 150a,b and transmitted to the consumer using the quantum APIs 110q of the network nodes 160a,b.

An entanglement distribution App or Software Defined Network (SDN) 125 is located on the application level of the architecture and manages the provider's entanglement distribution service.

Monitoring: For the entire Entanglement Distribution architecture or Entanglement Distribution system there can be continuous monitoring of all measurable quantities, from which individual parameter adjustments can be derived. By means of the metadata memory, it is possible to determine how many entangled states are currently stored. Not all these states are likely usable due to potential errors during storage or retrieval. A continuous estimation of the fidelity, which represents the ratio of usable states, can be obtained through control measurements on the quantum memories. Additionally, configuration steps of the control system can be derived from the metadata. For example, if there are few states available with a particular partner node, the generation rate can be adjusted via the configuration interface of the photon source, or the request rate can be limited through the configuration interface of the abstraction layer if requests exceed the generation speed. However, the goal is to design the photon sources to produce enough states. This can be estimated based on a current traffic matrix. The generation speed can be monitored both at the source and upon arrival at the memory by not storing any states for a certain period but instead performing only control measurements.

To accomplish this, the control system 600 being the API 110c periodically triggers test measurements. The steps described within the context of Fig. 5 negotiate the physical addresses of the photons, trigger them in synchronization, and verify their entanglement through a central Bell-state measurement 810 shown in Fig. 8. If this measurement fails too frequently, the entire system must be reinitialized accordingly.

Alarming: In case the monitoring system measures awkward system situations, alarming processes (via SNMP, integration to incident management processes) may be triggered.

Error Correction/redundancy: Since triggering and storing are not error-free processes, a quantum communication protocol on the user side can be executed multiple times. For example, using the API, N photons are queried for redundancy purposes. Triggering then occurs at the time selected by the application, followed by N subsequent time slots.

Multi-User-Operation: In multi-user operation, a distinction can be made between the classical and quantum mechanical abstraction interfaces. The operation of the classical interface is straightforward and functions like traditional web interfaces. For the quantum mechanical interface, a queueing system can be utilized, which operates on principles similar to disk access. Based on current knowledge, photons are triggered using a pulsed pump laser, which can provide up to 10⁹ pulses per second.

Load Management: The number of entangled photon pairs as a function of time of day is usually known by the EDaaS service operator. The SDN assures that a sufficient number of entangled photon pairs is being distributed among all participating network nodes. Origin-Destination matrices can define the communication load, i.e. the number of entangled photon pairs per second per hour of day, that the control system needs to supply. The EDaaS app tries to distribute sufficient entangled photon pairs among all network nodes to meet the requirement. This includes the choice of enough redundant entanglement distribution links and frequencies, alternative routes / paths (in case of outages) and/or configuration of Layer 2 links and Layer 3 routes.

Configuration: The SDN / App is responsible for the physical layer system configuration of the EDaaS service. This includes: configuration of the quantum channels, i.e., assignment of quantum channel frequencies between adjacent nodes, quantum links and quantum routes, optimization of quantum routes, configuration of photon repetition rates (system performance), configuration of Bell State Measurement (BSM) stations between network nodes to swap photonic entanglement, configuration of quantum storage devices (i.e. assignment of storage to channels, storage frequencies), and/or classical network configuration;
AAA: Authentication: Management of access rights of individual components or internal / external users. Authorization: Role management description about specific access roles of components or users. Accounting: Proper recording of the performance and money flows of the EDaaS service.

The SDN or App can definde EDaaS as an enterprise or telecom's provider service. A service offers the following benefits: Configuration of the physical layer (1,2,3) stack to distribute entanglement, plan to execution by scheduling system, i.e. high service quality, low outages, proper testing of large infrastructure deployments, service exposure to third parties, i.e., customers of the EDaaS service, are possible, and/or AAA delivers rights and roles management and proper accounting (incl. billing services).

Summary of the advantages of the invention:
- The system implements a modular architecture that clearly separates the responsibilities of the telecommunications provider from the activities of users or quantum communication protocols. The provider is responsible for the distribution, storage, and exposure of entangled photonic states across all network nodes, ensuring seamless connectivity between them. Users and quantum communication protocols operate independently, utilizing the exposed quantum states. The architecture supports multi-user and multi-application scenarios, enabling simultaneous use by diverse quantum applications without interference;
- Simplifying access to quantum communication technologies;
- Enabling the provision of entangled states for customers;
- Promoting the development of new quantum communication technologies;
- Leveraging existing fiber optic network infrastructures for new applications;
- Minimizing the need for investments in specialized infrastructures by utilizing existing networks;
- Scalability through deployment via network providers and utilization of existing network nodes;
- New potential revenue stream for operators in the future quantum communication business;

One new feature of the invention is the integration of known quantum technologies into the network of a telecommunication operator, which are then made available to customers through abstraction interfaces. This approach provides a practical solution for integrating quantum technologies into existing communication networks. By centralizing the role of the network operator in managing quantum memories, a flexible and accessible telecommunications service for the utilization of quantum communication protocols can be established, laying the foundation for future technological advancements in this field.

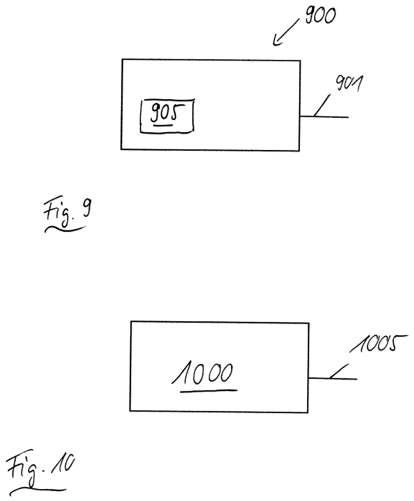

Fig. 9 shows a feed-forward control module 900 for managing the distribution of entangled quantum states to a quantum storage device. For that purpose, the feed-forward control module 900 has a communication interface 901 to communicate e.g. with a source. This module includes means 905 for dynamically regulating the number of entangled photon pairs sent to the quantum storage device. The regulation can be performed based on real-time network conditions, such as link quality or traffic congestion, and the fidelity of the quantum storage, including its coherence time and error rates. The goal is to ensure that a sufficient number of entangled photons are available for retrieval and use in quantum communication protocols.

Fig. 10 shows a load balancing module 1000 configured to monitor the usage of both quantum and classical communication interfaces. For instance, the module 1000 tracks the number of requests being made to the quantum API for retrieving entangled photon pairs and the classical API for metadata queries. Based on this data, the module dynamically adjusts the distribution of tasks across the two interfaces to prevent any single interface from becoming a bottleneck. For example, during a period of high demand, such as multiple quantum applications simultaneously requesting entangled states, the load balancing module can prioritize critical tasks, queue non-urgent requests, or allocate additional processing resources to maintain smooth operations. Similarly, if the classical API experiences a surge in metadata queries, the module can throttle less essential processes to ensure timely responses for essential operations. A communication interface 1005 of the load balancing module enables the module to interact with various components of the network, including quantum memories, classical metadata memories, and APIs. Its primary purpose is to collect real-time data on the usage of quantum and classical communication interfaces, such as the number of active requests, the status of resource availability, and current traffic loads.

### Reference signs:

- 100: Entanglement Distribution architecture or system
- 105: Network Provider Management employment
- 110c: classical API
- 110q: quantum API
- 115: quantum communication protocol
- 120: quantum channel
- 125: Software Defined Network
- 130: physical layer
- 135: link layer
- 140: application management
- 145: boxes
- 150: quantum memory (QM)
- 155: quantum mechanical API
- 160: network node
- 165: metadata memory (MM)
- 170: abstraction layer (AL)
- 175: Quantum Abstraction Layer
- 180: protocol conversion module
- 305: clock;
- 310: quantum source, in particular photon source
- 500: High-level-Abstraction Layer
- 590: photons
- 600: control system,
- 601: Redundancy module
- 700: consumer
- 800: Bell state measurement

## Claims

1. A high-level abstraction layer for managing quantum communication and classical communication systems, comprising:
• a classical abstraction layer, in particular a classical API, configured to interact with applications, in particular with the classical part of quantum applications, using classical protocols;
• a quantum abstraction layer, in particular a quantum Push-Interface, configured to interact with quantum communication protocols by exposing quantum states stored in a quantum memory;
• a routing module configured to send a command to expose at least one quantum state to a quantum memory, wherein the command comprises a communication address of the quantum communication protocol to which the quantum state of the quantum memory is to be exposed.

2. A network node for managing and/or distributing entangled quantum states, comprising:
• a quantum memory configured to store entangled quantum states, including entangled photons;
• a classical metadata memory configured to store metadata associated with the entangled quantum states in the quantum memory, wherein the metadata includes information such as the physical storage address, a logical identifier, a partner ID, frequency of the quantum channel, QM-ID and/or a coherence time of the entangled quantum states;
• wherein the classical metadata memory is configured to expose the metadata in a classical format accessible through classical communication protocols.

3. The network node of claim 2 comprising the high-level abstraction layer of claim 1.

4. The network node of claim 2, wherein the exposed quantum states are photons.

5. A redundancy module for managing the exposure of entangled quantum states from a quantum memory, comprising: a means for triggering error-corrected states, wherein the error-corrected states are configured to compensate for potential decoherence within the quantum memory, such that at least one photon remains suitable for use by a quantum communication protocol.

6. A time synchronization system for synchronizing components within a quantum communication network is disclosed, comprising:
• a clock configured to synchronize with quantum memory, photon sources, applications and/or classical communication components, in particular by using a Precision Time Protocol (PTP) or Optical Time and Frequency Transfer (TTF);
• means for assigning time bins to entangled quantum states based on synchronized time stamps from the clock;
• an algorithm configured to compute time delays and binning intervals for ensuring a coherent retrieval and distribution of entangled quantum states across the network.

7. The time synchronization system of claim 6, wherein the system is further configured to calculate time bin identifiers for each entangled quantum state stored in the quantum memory, wherein the time bin identifier is stored alongside the metadata in the classical metadata memory, wherein the time bin identifier is used to calculate the logical identifier of the quantum state.

8. A distribution system for distributing entangled photons across a quantum communication network, comprising:
• at least two quantum memories located at different network nodes, each configured to store entangled photon pairs;
• at least two metadata memories located at the respective network nodes, configured to store metadata associated with the stored photons, including logical identifiers and time stamps,
• a classical communication channel between a QM and a MM within their respective network node that enables a communication between the QM and the MM.

9. A cleaning control system for a metadata memory in a quantum communication network, comprising:
• a metadata memory containing data like the logical photon identifiers, "LPID", frequencies, partner ID and/or physical storage identifiers, "PhyID", associated with stored entangled quantum states;
• an erasing means configured to mark the data already exposed by the metadata memory, "MM", as used or to immediately delete the data entries from the metadata memory.

10. A method for exposing entangled quantum states is disclosed, comprising the following steps:
• storing entangled quantum states in a quantum memory at a network node;
• storing metadata associated with the quantum states in a classical metadata memory, wherein the metadata includes a physical storage address, a time slot identifier and a logical identifier;
• requesting the entangled quantum states from the quantum memory via a classical API using the respective metadata stored within the metadata memory;
• exposing the entangled quantum states to an application of a quantum communication protocol over a quantum communication channel.

11. The method of claim 10, comprising retrieving the metadata from the classical metadata memory via a classical API before retrieving the entangled quantum states from the quantum memory.

12. The method of any of the claims 10 to 11, further comprising performing time synchronization between the network node and user applications to ensure that the entangled quantum states are retrieved within their coherence time and/or and to ensure the assignment of photons to their entangled partners at other network nodes.

13. The method of any of the claims 11 to 12, further comprising converting the retrieval request from a classical communication protocol into a quantum protocol using a protocol conversion module to facilitate the retrieval of the entangled quantum states from the quantum memory and/or converting quantum protocol regarding a QM-storage process into a classical protocol using the protocol conversion module.

14. The method of any of the claims 11 to 13, further comprising a network controller configured to manage and configure the network by monitoring network conditions, controlling access to quantum channels, and automatically rerouting quantum states through alternative channels in the event of a channel failure.

15. The method of any of the claims 11 to 14, wherein the network controller is operated as a service by a telecommunications operator, the service being configured to provide global network management, including monitoring, channel configuration, and rerouting, to ensure consistent availability of quantum communication channels for users.
